# EUROPÄISCHE PATENTANMELDUNG

(11) **EP 3 936 445 A1**
(43) Veröffentlichungstag der Anmeldung: **12.01.2022**
(21) Anmeldenummer: 20185306.6
(22) Anmeldetag: 10.07.2020
(51) Int. Cl.: B65C 9/42, G01D 5/48, G10K 11/00, G01S 7/521, G01S 15/04

(54) **ULTRASCHALLSENSOR**

(71) Anmelder: Leuze electronic GmbH + Co. KG, 73277 Owen/Teck (DE)
(72) Erfinder: Scheu, Thomas, 72639 Neuffen (DE); Schweikert, Uwe, 73230 Kirchheim/Teck (DE)
(74) Vertreter: Ruckh, Rainer Gerhard

(57) **Zusammenfassung**

Die Erfindung betrifft einen Ultraschallsensor (1) zur Erfassung von Objekten in einem Überwachungsbereich mit einer Ultraschallwellen (2) aussendenden Ultraschallsender (3) und mit einem Ultraschallwellen (2) empfangenden Ultraschallempfänger (4). In einem den Ultraschallempfänger (4) aufnehmenden Gehäuse ist eine Empfangsöffnung (11) vorgesehen, durch welche vom Sender emittierte, durch den Überwachungsbereich geführte Ultraschallwellen (2) zum Ultraschallempfänger (4) geführt sind. Die Empfangsöffnung (11) ist von einem Schwächungsmaterial vorgesehen, welches Ultraschallwellen (2) absorbiert oder diffus reflektiert.

## Beschreibung

Die Erfindung betrifft einen Ultraschallsensor.

Derartige Ultraschallsensor dienen generell zur Erfassung von Objekten in einem Überwachungsbereich und weisen hierzu einen Ultraschallwellen aussendenden Ultraschallsender und einen Ultraschallwellen empfangenden Ultraschallempfänger auf.

Ein Anwendungsbeispiel für einen derartigen Ultraschallsensor ist die Detektion von Etiketten auf einem Trägermaterial. Typischerweise sind der Ultraschallsender und der Ultraschallempfänger in unterschiedlichen Gabelarmen eines gabelförmigen Gehäuses des Ultraschallsensors integriert, wobei die Gabelarme den Überwachungsbereich an gegenüberliegenden Rändern begrenzen. Das Trägermaterial mit den Etiketten wird dann durch den Überwachungsbereich gefördert. Zur Detektion der Etiketten werden vom Ultraschallsender ausgesendete Ultraschallwellen durch eine Sendeöffnung im Gehäuse in den Überwachungsbereich geführt. Je nachdem, ob die Ultraschallwellen nur auf das Trägermaterial oder auf das Trägermaterial mit einer darauf angeordneten Etikette treffen, werden diese unterschiedlich stark geschwächt. Die durch eine Empfangsöffnung zum Ultraschallempfänger geführten Ultraschallwellen generieren dabei unterschiedliche Empfangssignale, die in einer Auswerteeinheit zur Detektion der Etiketten ausgewertet werden.

Ein Problem hierbei besteht darin, dass die Ultraschallempfänger nicht vollständig durch die Empfangsöffnung geführt sind, sondern zum Teil am Gehäuse reflektiert werden. Dabei können die Ultraschallwellen mehrfach zwischen den Gabelarmen hin und her reflektiert werden.

Dies kann zu Fehldetektionen führen, und zwar insbesondere dann, wenn die Ultraschallwellen pulsförmig mit einer vorgegebenen Wiederholfrequenz ausgesendet werden. Die als erster Puls emittierten Ultraschallwellen können teilweise mehrfach zwischen den Gabeln des Gehäuses hin und her reflektiert werden und sich dann den nächsten Puls überlagern. Dies kann zu Interferenzender Ultraschallwellen führen, wodurch Fehldetektionen entstehen können.

Der Erfindung liegt die Aufgabe zugrunde einen Ultraschallsensor bereitzustellen, welcher eine hohe Funktionalität und Detektionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Ultraschallsensor zur Erfassung von Objekten in einem Überwachungsbereich mit einem Ultraschallwellen aussendenden Ultraschallsender und mit einem Ultraschallwellen empfangenden Ultraschallempfänger. In einem den Ultraschallempfänger aufnehmenden Gehäuse ist eine Empfangsöffnung vorgesehen, durch welche vom Sender emittierte, durch den Überwachungsbereich geführte Ultraschallwellen zum Ultraschallempfänger geführt sind. Die Empfangsöffnung ist von einem Schwächungsmaterial umgeben, welches Ultraschallwellen absorbiert oder diffus reflektiert.

Mit dem die Empfangsöffnung umgebenden Schwächungsmaterial wird der Anteil der Ultraschallwellen, die nicht durch die Empfangsöffnung zum Ultraschallempfänger geführt sind durch die absorbierende oder diffus streuende Eigenschaft des Schwächungsmaterials stark geschwächt, so dass dieser Anteil der Ultraschallwellen nicht durch unerwünschte Mehrfachreflexionen zu Fehldetektionen bei der Objekterfassung führen kann.

Die erfindungsgemäßen Schwächungsmaterialien können vorteilhaft bei unterschiedlichen Typen von Ultraschallsensoren zur Verbesserung der Detektionssicherheit eingesetzt werden.

Beispielsweise kann der Ultraschallsensor ein Taster sein, wobei dann der Ultraschallsender und der Ultraschallsensor auf derselben Seite des Überwachungsbereichs angeordnet sind.

Vorzugsweise sind dann der Ultraschallsender und der Ultraschallempfänger in einem gemeinsamen Gehäuse angeordnet.

Müssen dann Objekte vor einem die Ultraschallwellen reflektierenden Hintergrund erkannt werden, werden mit den Schwächungsmaterialien Mehrfachreflexionen zwischen dem Gehäuse und dem Hintergrund vermieden.

Weiterhin kann der Ultraschallsender und der Ultraschallempfänger an gegenüberliegenden Rändern des Überwachungsbereichs angeordnet sein, wobei dann der Ultraschallsensor nach dem Transmissionsprinzip arbeitet.

Objekte im Überwachungsbereich werden in diesem Fall dadurch erkannt, dass diese die Ultraschallwellen schwächen oder total reflektieren, so dass gegenüber einem freien Überwachungsbereich nur noch ein Teil der Ultraschallwellen zum Empfänger gelangt.

Bei derartigen Ultraschallsensoren können der Ultraschallsender und der Ultraschallempfänger in getrennten Gehäusen angeordnet sein.

Alternativ können der Ultraschallsender und der Ultraschallempfänger in unterschiedlichen Gabelarmen eines gabelförmigen Gehäuses angeordnet sein.

In diesen Fällen verhindert das Schwächungsmaterial Mehrfachreflexionen zwischen den Gehäusen oder Gehäuseteilen, in denen der Ultraschallsender und der Ultraschallempfänger integriert sind.

Gemäß einer vorteilhaften Ausführungsform ist das absorbierende Schwächungsmaterial ein Porenabsorber.

Die Porengrößen des Schwächungsmaterials sind dabei an die Frequenz beziehungsweise der Wellenlänge der Ultraschallwellen angepasst, so dass eine optimale Absorptionswirkung erzielt wird. Insbesondere weist der Porenabsorber Porengrößen im Bereich der Zähigkeitsgrenzschicht auf.

Die Zähigkeitsgrenzschicht ist die Schicht der Luft in einem Abstand zu einer schallharten Wand, bei welcher die Bewegung der Luftteilchen durch Reibung an dieser Wand gebremst wird. Liegt der Durchmesser der Poren im Bereich der Zähigkeitsgrenzschicht, findet in diesen Poren eine Absorption durch Reibung statt.

Beispielsweise ist der Porenabsorber ein offenporiger Kunststoff oder ein offenporiges Metall.

Die offenporige Struktur kann beispielsweise durch Aufschäumen erhalten werden.

Weiterhin kann das absorbierende Schwächungsmaterial mit Mikroöffnungen versehen sein.

Diese Mikroöffnungen können beispielsweise durch Ätzen oder Lasern hergestellt werden.

Gemäß einer zweckmäßigen Ausgestaltung weist das absorbierende Schwächungsmaterial mikrofeine Durchgangslöcher auf, deren Durchmesser an die Frequenz der Ultraschallwellen angepasst sind.

Insbesondere ist das absorbierende Schwächungsmaterial in Form von Platten oder Folien ausgebildet.

Gemäß einer weiteren vorteilhaften Ausführungsform ist das absorbierende Schwächungsmaterial ein Lochplattenabsorber.

In einer speziellen Ausgestaltung ist das absorbierende Schwächungsmaterial in Form von Helmholtzresonatoren ausgebildet.

Die Größen der Lochstrukturen sind an die Frequenz der Ultraschallwellen angepasst und liegen typischerweise im µm-Bereich.

Gemäß einer vorteilhaften Ausführungsform der Erfindung weist das diffus streuende Schwächungsmaterial eine Anordnung von Vertiefungen auf.

Dabei liegen die Vertiefungen im Bereich von λ/4 der Wellenlänge der Ultraschallwellen.

In den Vertiefungen werden die Ultraschallwellen diffus aufgestreut. Die Vertiefungen können beispielsweise dadurch gebildet werden, dass ein flächiger plattenförmiger Körper entsprechend gebogen oder geformt ist, dass insbesondere eine periodische oder auch spezifische Folge von linienförmigen Vertiefungen entsteht.

Weiterhin kann das diffus streuende Schwächungsmaterial eine periodische Anordnung von streuenden Strukturen aufweisen.

Dabei können das diffus streuende Schwächungsmaterial plattenförmig ausgebildet sein, von deren Oberseite die streuenden Strukturen hervorstehen. Die streuenden Strukturen erstrecken sich in Längs- oder Querrichtung des plattenförmigen Schwächungsmaterials.

Um ein optimales Streuverhalten zu erzielen, liegt die Strukturperiode der streuenden Strukturen im Bereich der Wellenlänge der Ultraschallwellen.

Besonders vorteilhaft ist das Schwächungsmaterial hydrophob.

Dadurch wird verhindert, dass beim Reinigen des Ultraschallsensors Wasser in die Strukturen des Schwächungsmaterials eindringt und damit deren akustische Eigenschaften ändert.

Die Herstellung des Schwächungsmaterials kann je nach Ausbildung und Materialbeschaffenheit in Form von Kunststoff-Spritzverfahren, Prägeverfahren, Laserbearbeitung von Rohmaterialien, spanenden Bearbeitungsprozessen, Sinterprozessen und dergleichen erfolgen.

Besonders vorteilhaft ist das Schwächungsmaterial mittels eines 3D-Druckers hergestellt.

Dieses Verfahren eignet sich insbesondere zur Herstellung von Schwächungsmaterialien mit Hohlraumstrukturen.

Gemäß einer ersten Variante der Erfindung ist das Schwächungsmaterial am Gehäuse vorgesehen oder Bestandteil des Gehäuses.

Das Schwächungsmaterial kann beispielsweise auf die Außenseite einer Gehäusewand des Ultraschallsensors, in der sich die Empfangsöffnung befindet, aufgebracht werden. Das Schwächungsmaterial kann durch Verkleben oder Verpressen auf dem Gehäuse angebracht sein. Auch kann das Schwächungsmaterial ein Einlegeteil bilden. Auch kann das Schwächungsmaterial durch Integration in ein Gehäusewerkzeug zur Herstellung des Gehäuses integriert werden.

Gemäß einer vorteilhaften Ausgestaltung der Erfindung ist eine Empfangsblende vorgesehen, welche die Empfangsöffnung ausbildet.

Das Schwächungsmaterial kann an der Empfangsblende vorgesehen sein. Alternativ besteht die Empfangsblende aus dem Schwächungsmaterial

Die Erfindung wird im Folgenden anhand der Zeichnungen erläutert. Es zeigen:
- Figur 1:: Sender-Empfängeranordnung des erfindungsgemäßen Ultraschallsensors.
- Figur 2:: Perspektivische Schnittdarstellung des Gehäuses des Ultraschallsensors.
- Figur 3:: Schnittdarstellung des Gehäuses gemäß Figur 2.
- Figur 4:: Einzeldarstellung einer Empfängerblende für den Ultraschallsensor gemäß den Figuren 1-3.
- Figur 5a, b:: Ausführungsbeispiele von absorbierendem Schwächungsmaterial für die Empfängerblende gemäß Figur 4.
- Figur 6a-d:: Beispiele von Schwächungsmaterialien mit periodischen streuenden Strukturen.
- Figur 7:: Ausführungsbeispiel eines dritten streuenden Schwächungsmaterials mit einer Anordnung von Vertiefungen.
- Figur 8:: Beispiel eines Schwächungsmaterials in Form eines Lochplattenabsorbers.
- Figur 9:: Beispiel eines Schwächungsmaterials in Form eines Helmholtzresomator.

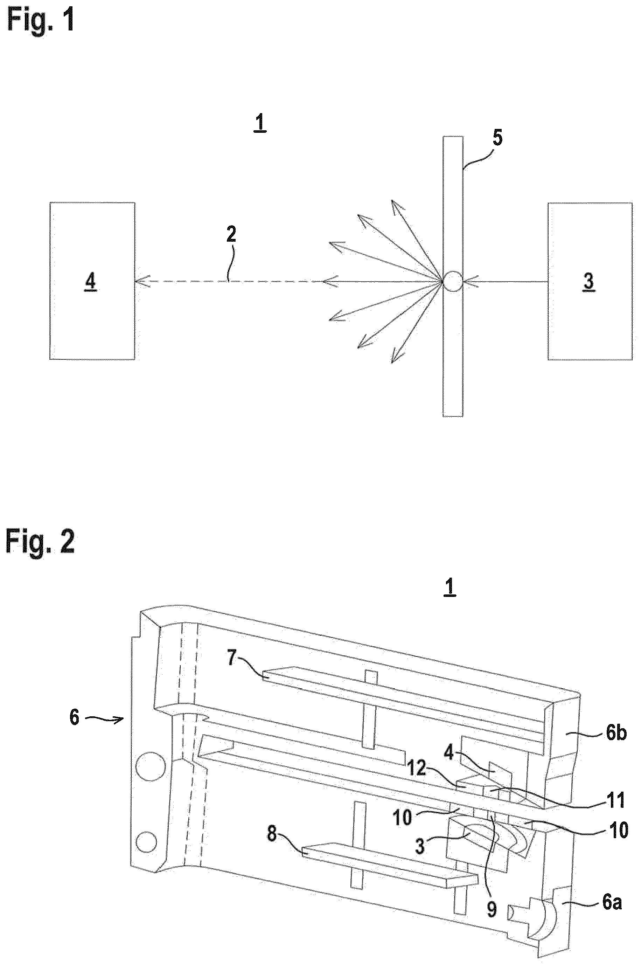

Figur 1 zeigt für ein Beispiel des erfindungsgemäßen Ultraschallsensors 1 eine Sender-Em pfängeranordnung.

Der Ultraschallsensor 1 arbeitet im vorliegenden Fall nach dem Transmissionsprinzip und weist einen Ultraschallwellen 2 aussendenden Ultraschallsender 3 und einen Ultraschallwellen 2 empfangenden Ultraschallempfänger 4 an gegenüberliegenden Rändern eines Überwachungsbereichs auf.

Bei freiem Überwachungsbereich gelangen die Ultraschallwellen 2 ungehindert vom Ultraschallsender 3 zum Ultraschallempfänger 4. Ein Objekteingriff im Überwachungsbereich führt generell zur Beeinflussung der Ultraschallwellen 2, wodurch sich die Empfangssignale am Ausgang des Ultraschallempfängers 4 ändern, was in einer Auswerteeinheit zur Erfassung des Objekts ausgenutzt wird.

Im vorliegenden Fall ist das Objekt ein Etikett 5, das zu einer Schwächung und Streuung der Ultraschallwellen 2 führt, wie Figur 1 zeigt.

Typischerweise werden mit dem Ultraschallsensor 1 auf einem Trägermaterial angeordnete Etiketten 5 erkannt.

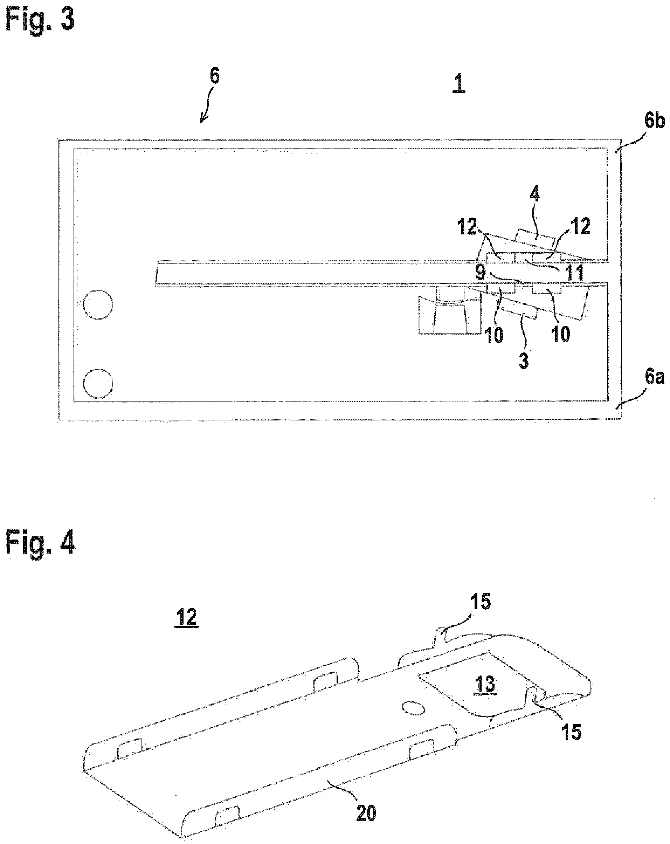

Die Figuren 2 und 3 zeigen ein Beispiel eines Gehäuses 6 für den Ultraschallsensor 1 gemäß Figur 1.

Das Gehäuse 6 ist gabelförmig mit zwei parallel in Abstand zueinander verlaufenden Gabelarmen 6a, 6b ausgebildet. Der Zwischenraum zwischen den Gabelarmen 6a, 6b bildet den Überwachungsbereich.

Im unteren Gabelarm 6a befindet sich der Ultraschallsender 3, im oberen Gabelarm 6b der Ultraschallempfänger 4. Der Ultraschallsender 3 und der Ultraschallempfänger 4 sind jeweils schräg liegend im jeweiligen Gabelarm 6a, 6b angeordnet, so dass die Ultraschallwellen 2 nicht senkrecht an den Längsachsen verlaufen, sondern in einem vorgegebenen Neigungswinkel.

Dem Ultraschallsender 3 ist eine erste Leiterplatte 8 mit Elektronikkomponenten zur Ansteuerung des Ultraschallsenders 3 zugeordnet. Vorteilhaft ist der Ultraschallsensor 1 so ausgebildet, dass dieser pulsförmige Ultraschallwellen 2 aussendet. Dem Ultraschallempfänger 4 ist eine zweite Leiterplatte 7 mit Elektronikkomponenten, welche die Auswerteeinheit bilden, zugeordnet.

Dem Ultraschallsender 3 ist eine eine Sendeöffnung 9 begrenzende Senderblende 10 zugeordnet. Dem Ultraschallempfänger 4 ist eine eine Empfangsöffnung 11 ausbildende Empfangsblende 12 zugeordnet. Die vom Ultraschallsender 3 ausgesandten Ultraschallwellen 2 werden durch die Sendeöffnung 9 der Senderblende 10 in den Überwachungsbereich geführt und gelangen dann über die Empfangsöffnung 11 der Empfangsblende zum Ultraschallempfänger 4.

Insbesondere dann, wenn die Ultraschallwellen 2 auf ein Objekt wie zum Beispiel ein Etikett 5 auftreffen, werden diese aufgestreut, so dass die Ultraschallempfänger 4 nicht vollständig durch die Empfangsöffnung 11 zum Ultraschallempfänger 4 geführt sind, sondern an den die Empfangsöffnung begrenzenden Randbereichen der Empfangsblende reflektiert werden.

Um Mehrfachreflexionen dieses Anteils der Ultraschallwellen 2 zu vermeiden, ist erfindungsgemäß der die Empfangsöffnung 11 angebende Rand der Empfangsblende mit einem Ultraschallwellen 2 absorbierenden oder diffus streuenden Schwächungsmaterial 12 versehen.

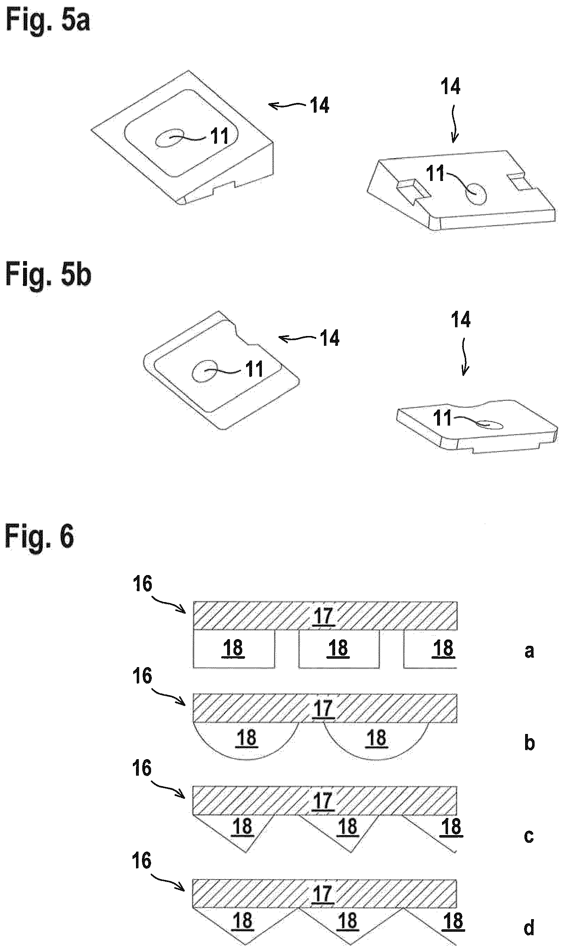

Ein Beispiel hierfür zeigen die Figuren 4, 5a, 5b. Figur 4 zeigt eine Einzeldarstellung der Empfangsblende, die im vorliegenden Fall aus einem Blechteil 20 besteht. Die Empfangsblende weist eine Öffnung 13 auf, in die ein aus dem Schwächungsmaterial bestehendes Absorberelement 14 eingesetzt wird. Die Figuren 5a, 5b zeigen zwei Ausführungsformen des Absorberelements 14. Das Absorberelement 14 gemäß Figur 5a ist keilförmig ausgebildet, während das Absorberelement 14 gemäß Figur 5b in Form einer flachen Platte ausgebildet ist. Das Absorberelement 14 wird in die Öffnung 13 der Empfangsblende eingelegt und durch Anbringen zweier Nasen 15 der Empfangsblende an dieser fixiert. Jedes Absorberelement 14 weist eine Blendenöffnung auf, die die Empfangsöffnung 11 ausbildet.

Vorteilhaft ist das absorbierende Schwächungsmaterial ein Porenabsorber.

Dabei weist der Porenabsorber Porengrößen im Bereich der Zähigkeitsgrenzschicht auf.

Insbesondere ist der Porenabsorber ein offenporiger Kunststoff oder ein offenporiges Metall.

Weiterhin kann das absorbierende Schwächungsmaterial mit Mikroöffnungen versehen sein.

Schließlich kann das absorbierende Schwächungsmaterial mikrofeine Durchgangslücken aufweisen, deren Durchmesser an die Frequenz der Ultraschallwellen 2 angepasst sind.

Dabei ist das absorbierende Schwächungsmaterial in Form von Platten oder Folien ausgebildet.

Die Figuren 6a - 6d zeigen Varianten eines diffus streuenden Schwächungsmaterials. Dabei bildet das Schwächungsmaterial ein Streuelement 16, das an der Empfangsblende fixiert werden kann. Das Streuelement 16 weist einen plattenförmigen Grundkörper 17 auf, von dessen Oberfläche periodische streuende Strukturen 18 hervorstehen, die, wie die Figuren 6a - 6d zeigen, unterschiedliche Querschnitte aufweisen können.

Die streuenden Strukturen 18 können eine Matrixanordnung bilden oder linienförmig über den Grundkörper 17 verteilt sein. Die Strukturperiode dieser Strukturen 18 entspricht zumindest näherungsweise der Wellenlänge der Ultraschallwellen 2.

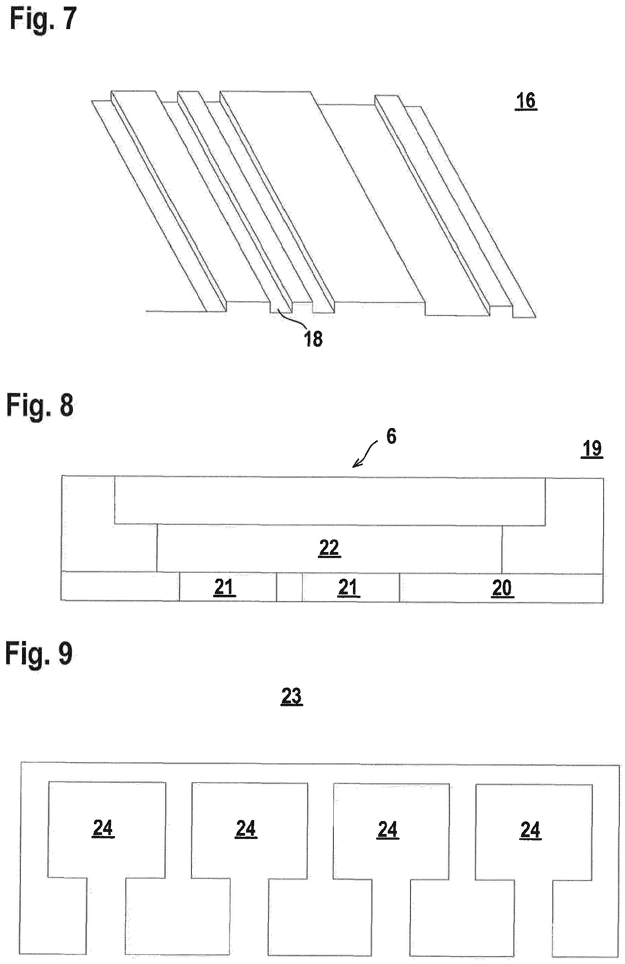

Figur 7 zeigt ein weiteres Streuelement 16 in Form einer Platte, in welcher linienförmige Vertiefungen eingearbeitet sind, deren Filter etwa λ/4 der Wellenlänge der Ultraschallwellen 2 entsprechen.

Figur 8 zeigt eine Struktur eines absorbierenden Schwächungsmaterials in Form eines Lochplattenabsorbers 19. Der Lochplattenabsorber 19 besteht im Wesentlichen aus einem Blechteil 20 mit Mikrolöchern 21, die vor Gehäusevertiefungen 22 angeordnet sind.

Figur 9 zeigt eine Struktur eines absorbierenden Schwächungsmaterials in Form eines Helmholtzresonators 23. Der Helmholtzresonator weist als absorbierende Struktur eine Anordnung von Hohlräumen 24 auf.

### B ezugszei chenli ste

- (1): Ultraschallsensor
- (2): Ultraschallwellen
- (3): Ultraschallsender
- (4): Ultraschallempfänger
- (5): Etikett
- (6): Gehäuse
- (6a, b): Gabelarm
- (7): Leiterplatte
- (8): Leiterplatte
- (9): Sendeöffnung
- (10): Senderblende
- (11): Empfangsöffnung
- (12): Empfängerblende
- (13): Öffnung
- (14): Absorberelement
- (15): Nase
- (16): Streuelement
- (17): Grundkörper
- (18): Strukturen
- (19): Lochplattenabsorber
- (20): Blechteil
- (21): Mikroloch
- (22): Gehäusevertiefung
- (23): Helmklotzresonator
- (24): Hohlraum

## Patentansprüche

1. Ultraschallsensor (1) zur Erfassung von Objekten in einem Überwachungsbereich mit einem Ultraschallwellen (2) aussendenden Ultraschallsender (3) und mit einem Ultraschallwellen (2) empfangenden Ultraschallempfänger (4), wobei in einem den Ultraschallempfänger (4) aufnehmenden Gehäuse (6) eine Empfangsöffnung (11) vorgesehen ist, durch welche vom Sender emittierte, durch den Überwachungsbereich geführte Ultraschallwellen (2) zum Ultraschallempfänger (4) geführt sind, **dadurch gekennzeichnet, dass** die Empfangsöffnung (11) von einem Schwächungsmaterial umgeben ist, welches Ultraschallwellen (2) absorbiert oder diffus reflektiert.

2. Ultraschallsensor (1) nach Anspruch 1, **dadurch gekennzeichnet, dass** das absorbierende Schwächungsmaterial ein Porenabsorber ist.

3. Ultraschallsensor (1) nach Anspruch 2, **dadurch gekennzeichnet, dass** der Porenabsorber ein offenporiger Kunststoff oder ein offenporiges Metall ist, oder dass das absorbierende Schwächungsmaterial mit Mikroöffnungen versehen ist.

4. Ultraschallsensor (1) nach einem der Ansprüche 2 oder 3, **dadurch gekennzeichnet, dass** der Porenabsorber Porengrößen im Bereich der Zähigkeitsgrenzschicht aufweist, oder dass das absorbierende Schwächungsmaterial mikrofeine Durchgangslöcher aufweist, deren Durchmesser an die Frequenz der Ultraschallwellen (2) angepasst sind.

5. Ultraschallsensor (1) nach Anspruch 4, **dadurch gekennzeichnet, dass** das absorbierende Schwächungsmaterial in Form von Platten oder Folien ausgebildet ist.

6. Ultraschallsensor (1) nach Anspruch 1, **dadurch gekennzeichnet, dass** das absorbierende Schwächungsmaterial ein Lochplattenabsorber (19) ist.

7. Ultraschallsensor (1) nach Anspruch 6, **dadurch gekennzeichnet, dass** das absorbierende Schwächungsmaterial in Form von Helmholtzresonatoren (23) ausgebildet ist.

8. Ultraschallsensor (1) nach einem der Ansprüche 1 - 7, **dadurch gekennzeichnet, dass** das diffus streuende Schwächungsmaterial eine Anordnung von Vertiefungen aufweist.

9. Ultraschallsensor (1) nach Anspruch 8, **dadurch gekennzeichnet, dass** die Vertiefungen im Bereich von λ/4 der Wellenlänge der Ultraschallwellen (2) liegen.

10. Ultraschallsensor (1) nach einem der Ansprüche 1 - 9, **dadurch gekennzeichnet, dass** das diffus streuende Schwächungsmaterial eine periodische Anordnung von streuenden Strukturen (18) aufweist.

11. Ultraschallsensor (1) nach Anspruch 10, **dadurch gekennzeichnet, dass** das diffus streuende Schwächungsmaterial plattenförmig ausgebildet ist, von deren Oberseite die streuenden Strukturen (18) hervorstehen.

12. Ultraschallsensor (1) nach Anspruch 11, **dadurch gekennzeichnet, dass** sich die streuenden Strukturen (18) in Längs- oder Querrichtung des plattenförmigen Schwächungsmaterials erstrecken.

13. Ultraschallsensor (1) nach einem der Ansprüche 1 - 12, **dadurch gekennzeichnet, dass** das Schwächungsmaterial hydrophob ist.

14. Ultraschallsensor (1) nach einem der Ansprüche 1 - 13, **dadurch gekennzeichnet, dass** das Schwächungsmaterial mittels eines 3D-Druckers hergestellt ist.

15. Ultraschallsensor (1) nach einem der Ansprüche 1 - 14, **dadurch gekennzeichnet, dass** das Schwächungsmaterial am Gehäuse (6) vorgesehen ist oder Bestandteil des Gehäuses (6) ist.

16. Ultraschallsensor (1) nach einem der Ansprüche 1 - 15, **dadurch gekennzeichnet, dass** eine Empfangsblende vorgesehen ist, welche die Empfangsöffnung (11) ausbildet.

17. Ultraschallsensor (1) nach Anspruch 16, **dadurch gekennzeichnet, dass** das Schwächungsmaterial an der Empfangsblende vorgesehen ist, oder dass die Empfangsblende aus dem Schwächungsmaterial besteht.

18. Ultraschallsensor (1) nach Anspruch 1 - 17, **dadurch gekennzeichnet, dass** dieser ein Taster ist, wobei der Ultraschallsender (3) und der Ultraschallempfänger (4) auf derselben Seite des Überwachungsbereichs angeordnet sind.

19. Ultraschallsensor (1) nach einem der Ansprüche 1 - 17, **dadurch gekennzeichnet, dass** dieser nach dem Transmissionsprinzip arbeitet, wobei der Ultraschallsender (3) und der Ultraschallempfänger (4) an gegenüberliegenden Rändern des Überwachungsbereichs angeordnet sind.

20. Ultraschallsensor (1) nach Anspruch 19, **dadurch gekennzeichnet, dass** der Ultraschallsender (3) und der Ultraschallempfänger (4) in getrennten Gehäusen (6) angeordnet sind, oder dass der Ultraschallsender (3) und der Ultraschallempfänger (4) in unterschiedlichen Gabelarmen (6a, 6b) eines gabelförmigen Gehäuses (6) angeordnet sind.
